(19) Europäisches Patentamt
European Patent Office
Office européen des brevets

(11) **EP 1 561 508 A1**

(12) **EUROPEAN PATENT APPLICATION**
published in accordance with Art. 158(3) EPC

(43) Date of publication:
**10.08.2005 Bulletin 2005/32**

(51) Int Cl.⁷: **B01J 19/10**, B01J 3/08, C01G 25/02, F26B 3/10, F26B 5/02

(21) Application number: **03810614.2**

(22) Date of filing: **06.11.2003**

(86) International application number:
**PCT/JP2003/014128**

(87) International publication number:
**WO 2004/041427 (21.05.2004 Gazette 2004/21)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.11.2002 JP 2002325655**

(71) Applicants:
- **DAI-ICHI KOGYO SEIYAKU CO., LTD.**
  **Shimogyo-ku Kyoto 600-8873 (JP)**
- **Pultech Corporation**
  **Kyoto-shi, Kyoto 600-8873 (JP)**
- **TORAY INDUSTRIES, INC.**
  **Tokyo 103-8666 (JP)**

(72) Inventors:
- **TSURUMI, Toru**
  **Sakyo-ku, Kyoto-shi, Kyoto 606-0012 (JP)**

- **YOSHINO, Masaki**
  **Otsu-shi, Shiga 520-0842 (JP)**
- **SABI, Mineo**
  **Omihachiman-shi, Shiga 523-0044 (JP)**
- **YOSHIDA, Fumio**
  **Otsu-shi, Shiga 520-0843 (JP)**
- **ISHIDA, Satoshi**
  **Yokkaichi-shi, Mie 510-0834 (JP)**
- **YONEHARA, Minoru**
  **Neyagawa-shi, Osaka 572-0804 (JP)**
- **KIMURA, Toshiaki**
  **Suita-shi, Osaka 565-0831 (JP)**
- **KUBOTANI, Atsuyoshi,**
  **Nishinomiya-shi, Hyogo 669-1132 (JP)**

(74) Representative: **TBK-Patent**
**Bavariaring 4-6**
**D-80336 München (DE)**

(54) **INORGANIC FINE PARTICLES, INORGANIC RAW MATERIAL POWDER, AND METHOD FOR PRODUCTION THEREOF**

(57)   The present invention provides new process for preparing inorganic fine particles, which suppresses agglomeration and adhesion of particles due to heat when preparing powder from a raw material liquid such as a slurry of zirconia hydrate fine particles in order to obtain inorganic raw material powder having sharp particle size distribution. Furthermore, the present invention provides a new process for preparing inorganic fine particles, which can make the chemical structure homogenous among the produced particles and inside the particles even in a multi-component system. The present invention provides a process for preparing inorganic fine particles, which comprises heating and applying impulse waves to a raw material liquid.

FIG. 1

**Description**

TECHNICAL FIELD

The present invention relates to inorganic fine particles, inorganic raw material powder and preparation processes thereof. As the process for preparing inorganic fine particles, the present invention relates to the process of preparing fine particles of zirconia hydrate and as the process for preparing inorganic raw material powder, the present invention relates to the process of preparing zirconia raw material powder from fine particles of zirconia hydrate. Also, the present invention relates to inorganic fine particles and inorganic raw material powder prepared by the processes.

BACKGROUND ART

Ceramic powder has conventionally been prepared by precipitating hydrates comprising neutralized hydroxides, neutralized coprecipitated hydroxides and hydrolyzates of metal salt and composites thereof, making the precipitate into powder by a drying method such as still drying and spray drying, and thereafter calcinating and pulverizing.
As a process for preparing zirconia fine powder, JP-2000-327416 discloses the method of obtaining raw material powder by dissolving an aqueous solution of salt such as yttrium or cerium as a secondary component in an aqueous solution of zirconium salt, calcinating the aqueous solution in the presence of oxygen after rapid drying, wet pulverizing the calcinated article and then drying. Also, JP-A-5-246720 discloses the method of obtaining raw material powder by spray drying and calcinating a slurry obtained by hydrolysis or neutralization precipitation of aqueous zirconium salt. However, in the process of JP-A-2000-327416, when obtaining zirconia fine powder, anti-corrosion measures must be taken for the equipment against hydrochloric gas that is generated when calcinating in order to rapidly dry and calcinate the aqueous solution of zirconium salt and furthermore, a wet pulverization step is necessary after calcination. On the other hand, in the process of JP-A-5-246720, because the precipitation behavior when conducting hydrolysis or neutralization precipitation between the zirconium compound which is the main component and the yttrium compound which is the secondary component is usually different, maintaining homogeneity of the composition is difficult. Also, the fine particles produced in the aqueous solution agglomerate due to surface tension of the water when drying and preparing fine particles tend to become difficult. Therefore, when calcinating the obtained dried matter to obtain zirconia raw material powder, the calcinated powder must be pulverized to become fine and uniform.
In this way, the dried matter prepared by spray drying becomes finer particles if mechanically pulverized further, but in such a case, the process becomes a two step process and may be unsatisfactory in terms of production costs. This also applies to dried matter prepared by still drying. Also, even when the dried matter is not pulverized, in order to obtain fine particle powder, when drying by spray drying, the liquid drops containing fine particles of inorganic metal hydrate must be made as fine as possible using a high pressure nozzle or a high speed rotating atomizer and dried. However, in such a case, clogging of the nozzle, abrasion of the equipment due to high speed rotation of the atomizer and agglomeration of the particles due to surface tension of water are difficult to avoid. Furthermore, to suppress the action of surface tension of water, additives such as a surfactant must be added and obtaining inorganic metal hydrate of high purity was difficult.
JP-A-9-175812 discloses the method of preparing a silicic compound by drying an aqueous solution of a silicic compound by pulse impulse waves. However, this method was considered to shorten the heating and dehydrating time in the heating and calcinating step and reducing the heat load in the calcinating step when heating and calcinating amorphous water-containing silicic compound powder and does not consider obtaining particles having sharp particle size distribution.

DISCLOSURE OF INVENTION

The object of the present invention is to provide new inorganic fine particles and inorganic raw material powder, which suppress agglomeration and adhesion of particles due to heat when preparing powder from a raw material liquid such as a slurry of zirconia hydrate fine particles in order to obtain inorganic raw material powder having a sharp particle size distribution, and a process for preparing the same. Furthermore, the present invention aims to provide inorganic fine particles and inorganic raw material powder, which can make the chemical structure homogenous among the produced particles and inside the particles even in a multi-component system, and a process for preparing the same.
As a result of intensive studies to solve the above problems, the various problems caused by agglomeration of particles in obtaining inorganic raw material powder having a sharp particle size distribution and the various problems in obtaining fine particles having a homogeneous chemical structure in a multi-component system were found to be solved by heating and applying impulse waves to a raw material liquid. Particularly, by using a drying means utilizing impulse waves such as a pulse combustion dryer to the raw material liquid, the above problems can be solved without adding an additive such as a surfactant.

That is, the present invention relates to a process for preparing inorganic fine particles, which comprises heating and applying impulse waves to a raw material liquid.

The impulse waves are preferably ultrasonic vibration.

Heating and application of impulse waves to the raw material liquid are preferably conducted by contacting the raw material liquid with pulse combustion gas.

The pulse combustion gas preferably has frequency range of 50 to 1000 Hz, pressure amplitude of at least $\pm$ 0.2 kg/cm$^2$, sound pressure of 100 to 200 decibel and contact gas temperature of 100 to 1000°C.

The raw material liquid is preferably a mixture of a solvent and an inorganic metal compound and/or a solution of an inorganic metal compound.

The mixture of a solvent and an inorganic metal compound is not particularly limited as long as the inorganic metal compound is insoluble in the solvent and is preferably a mixture of a solvent and an inorganic metal hydrate. The obtained inorganic particles are fine particles of inorganic metal hydrate.

The mixture of a solvent and an inorganic metal hydrate insoluble in the solvent preferably contains at least one of a slurry of zirconia hydrate fine particles, a slurry of ceria hydrate fine particles, a slurry of titania hydrate fine particles, a slurry of fine particles of a hydrated silicic compound and a slurry of alumina hydrate fine particles.

The mixture of a solvent and an inorganic metal hydrate insoluble in the solvent preferably comprises a neutralized hydroxide, a neutralized coprecipitated hydroxide, a hydrolyzate or a composite thereof.

The fine particles of inorganic metal hydrate in the mixture of a solvent and an inorganic metal hydrate insoluble in the solvent are preferably 0.01 to 50 $\mu$m.

The solution of an inorganic metal compound preferably is an aqueous solution of a water-soluble inorganic metal salt and the obtained inorganic particles are fine particles of inorganic metal salt or modifications thereof.

The aqueous solution of a water-soluble inorganic metal salt preferably contains at least one of an aqueous solution of zirconyl chloride, an aqueous solution of zirconyl sulfate, an aqueous solution of zirconyl nitrate, an aqueous solution of cerium chloride, an aqueous solution of titanium tetrachloride, an aqueous solution of titanium trichloride, an aqueous solution of aluminum chloride, an aqueous solution of magnesium chloride, an aqueous solution of calcium chloride or an aqueous solution of a silicic compound.

The present invention also relates to a process for preparing inorganic raw material powder, which comprises calcinating and pulverizing the inorganic particles obtained by the above process.

The present invention also relates to inorganic fine particles and inorganic raw material powder having a ratio of arithmetic standard deviation to arithmetic average size found from particle size distribution measured by an optical method of at most 0.8.

According to the present invention, inorganic fine particles can be obtained, which have approximately the same bulk density as inorganic metal hydrates obtained by the conventional drying method, small particle size and extremely sharp particle size distribution, without using an additive such as a surfactant to suppress agglomeration action due to surface tension of water. Also, inorganic fine particles can be obtained, which are compositionally homogeneous when microscopically observed, even in a multi-component system. Furthermore, in preparation of inorganic raw material powder the pulverizing step conducted after calcination of inorganic fine particles can be conducted in an extremely short time.

BRIEF DESCRIPTION OF DRAWING

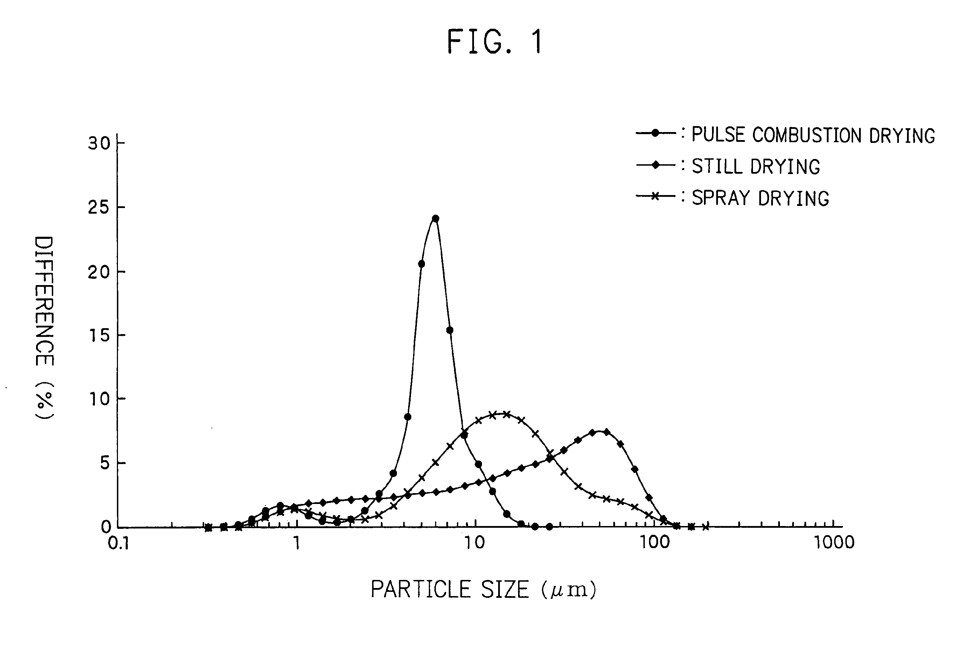

Fig. 1 is the particle size distribution of zirconia hydrate powder obtained by pulse combustion drying, still drying or spray drying a hydrolyzed slurry of zirconia hydrate fine particles.

BEST MODE FOR CARRING OUT THE INVENTION

The process for preparing inorganic particles of the present invention is conducted by heating and applying impulse waves to a raw material liquid. Herein, the raw material liquid is not particularly limited, as long as the liquid contains the inorganic metal compound of the inorganic particles to be obtained or is a liquid that is converted into the inorganic particles to be obtained by modification. For example, a mixture of a solvent and an inorganic metal compound that is liquid at room temperature such as various alcoxides including tetraethyl orthosilicate and titanium isopropoxide and titanium tetrachloride or a solution in which an inorganic metal compound is dissolved can be used.

A mixture of a solvent and an inorganic metal compound refers to a mixture wherein the inorganic metal compound to be obtained is mixed in a solvent as compounds such as hydrates, oxides, carbonates and sulfates. Specific examples of hydrates are zirconia hydrate, ceria hydrate, titania hydrate, hydrated silicic compound and alumina hydrate. Examples of oxides are zirconium oxide, cerium oxide and titanium oxide and examples of carbonates are zirconium carbonate, cerium carbonate and calcium carbonate. Examples of sulfates are cerium sulfate, aluminum sulfate and magnesium sulfate.

As the solvent, water, ethanol, methyl ethyl ketone and toluene are suitably used.

Particularly, a slurry of zircona hydrate fine particles, a slurry of ceria hydrate fine particles, a slurry of titania hydrate fine particles, a slurry of fine particles of hydrated silicic compound and a slurry of alumina hydrate fine particles, which contain inorganic metal hydrate as the inorganic metal compound and water as the solvent, are preferably used from the viewpoints that the discharged water is easily treated and special explosion-proof equipment is unnecessary. Particularly, the slurry of zircona hydrate fine particles is preferable from the viewpoint of chemical stability.

The inorganic metal compound can be used alone or mixed together with different types.

For example, zirconia hydrate can be hydrate containing zirconium oxide and zirconium hydroxide alone or a mixture thereof and yttrium oxide, yttrium hydroxide, aluminum oxide, aluminum hydroxide, cerium oxide and/or cerium hydroxide (hereinafter referred to as complex zirconia hydrate).

The zirconium oxide or zirconium hydroxide, yttrium oxide or yttrium hydroxide, aluminum oxide or aluminum hydroxide and cerium oxide or cerium hydroxide can be produced by hydrolysis of an aqueous solution of zirconium salt, yttrium salt, aluminum salt or cerium salt or by adding alkali or ammonia thereto.

Examples of the zirconium salt are zirconium oxychloride, zirconyl nitrate and zirconyl sulfate. Also, a mixture of zirconium hydroxide and acid (sulfuric acid, hydrochloric acid and nitric acid) can be used. Of these, from the viewpoints of economic efficiency, ease in handling and ease in after-treatment, zirconium oxychloride, zirconyl nitrate or a mixture of zirconium hydroxide and hydrochloric acid or nitric acid is preferably used.

Examples of the yttrium salt are yttrium chloride, yttrium nitrate and yttrium sulfate. Also, a mixture of yttrium hydroxide and acid (sulfuric acid, hydrochloric acid and nitric acid) can be used. Of these, from the viewpoints of economic efficiency, ease in handling and ease in after-treatment, yttrium chloride, yttrium nitrate or a mixture of yttrium hydroxide and hydrochloric acid or nitric acid is preferably used.

Examples of the cerium salt are cerium chloride, cerium nitrate and cerium sulfate. Also, a mixture of cerium hydroxide and acid (sulfuric acid, hydrochloric acid and nitric acid) can be used. Of these, from the viewpoints of economic efficiency, ease in handling and ease in after-treatment, cerium chloride, cerium nitrate or a mixture of cerium hydroxide and hydrochloric acid or nitric acid is preferably used.

When obtaining high strength zirconia, the content of yttrium oxide is preferably 1.0 to 10 % by weight, more preferably 2 to 6 % by weight, further preferably 4.5 to 5.5 % by weight based on zirconia. When the content is less than 1.0 % by weight, stability of tetragonal zirconia particles tends to decrease. When the content is more than 10 % by weight, the proportion of cubic zirconia particles increase and the toughness of the sintered article using the particles as the raw material tends to decrease.

The content of cerium oxide is preferably 1.0 to 77 % by weight, more preferably 13 to 68 % by weight, further preferably 26 to 68 % by weight based on zirconia. When the content is less than 1.0 % by weight, stability of tetragonal zirconia tends to decrease. When the content is more than 77 % by weight, hardness and thermal stability tend to decrease.

Furthermore, the zirconia hydrate can contain aluminum compounds such as aluminum oxide, aluminum hydroxide, aluminum chloride and aluminum sulfate.

The particles size of the fine particles of the complex inorganic metal hydrate in the slurry obtained by mixing the above is preferably 0.01 to 50 μm, more preferably 0.05 to 50 μm, further preferably 0.1 to 20 μm, particularly preferably 0.3 to 15 μm. When the particle size is less than 0.01 μm, the particle size tends to increase by agglomeration even when pulse combustion drying is conducted. When the particle size is more than 50 μm, the effect of crushing the particles by pulse combustion gas becomes small and the particle size after drying tends to become large.

The concentration of neutralized hydroxides, neutralized coprecipitation hydroxides, hydrolyzates or composites thereof in the fine particles of the complex inorganic metal hydrate in the slurry is preferably 5 to 50 % by weight, more preferably 5 to 45 % by weight, further preferably 10 to 40 % by weight, particularly preferably 10 to 30 % by weight converted to dried matter. When the concentration is less than 5 % by weight, the particle size after drying becomes too fine that collecting tends to become difficult. When the concentration is more than 50 % by weight, operations such as transporting of the slurry become difficult, the particle size after drying becomes large and the particle size distribution tends to become broad.

Examples of the method for mixing the composite of fine particles of complex inorganic metal hydrate such as zirconia particles are the method of preparing a mixed solution by dissolving soluble zirconium salts and secondary soluble salts (and soluble aluminum salts) in water and thereafter, hydrolyzing to obtain hydrated zirconia from zirconium salts; the method of obtaining hydrated zirconia from zirconium salts and thereafter neutralizing to obtain complex zirconia hydrate; the method of obtaining complex zirconia hydrate by neutralizing and coprecipitating the above mixed solution to produce complex hydroxide; the method of suspending zirconia particles and yttrium oxide particles and/or cerium oxide particles alone respectively in a solvent and then mixing; and the method of mixing zirconia particles and yttrium oxide particles and/or cerium oxide particles and then suspending in a solvent, but are not limited thereto.

Examples of the solvent used when preparing the slurry are water, alcohol, a mixed solution of water/alcohol, a mixed solution of methyl ethyl ketone/water and toluene. Of these, from the viewpoints of economical efficiency and safety, water or a mixed solution of water/alcohol is preferable.

The fine particles of complex zirconia hydrate can be prepared by heating the slurry of fine particles of complex zirconia hydrate and then contacting with impulse waves.

As the raw material liquid in the process for preparing fine particles of an inorganic metal compound of the present invention, a solution of an inorganic metal compound can be used. Examples of the solvent used in the solution are water, alcohol and a mixed solution of water/alcohol. Of these, from the viewpoints of economical efficiency and safety, water or a mixed solution of water/alcohol is preferable.

Examples of the inorganic metal compound used in the solution of an inorganic metal compound are hydroxides, chlorides, sulfates, nitrates and alcoxide compounds. Of these, from the viewpoints of economical efficiency and safety, an inorganic metal salt that is soluble in water is preferable. Examples of inorganic metal salts soluble in water are chlorides, sulfates and nitrates. Specific examples of the aqueous solution of an inorganic metal salt are an aqueous solution of zirconyl chloride, an aqueous solution of zirconyl sulfate, an aqueous solution of zirconyl nitrate, an aqueous solution of cerium chloride, an aqueous solution of titanium tetrachloride, an aqueous solution of titanium trichloride, an aqueous solution of aluminum chloride, an aqueous solution of magnesium chloride and an aqueous solution of calcium chloride. Of these, an aqueous solution of a chloride is preferable from the viewpoints of economical efficiency and ease in handling.

In the process for preparing inorganic fine particles of the present invention, impulse waves refer to the state in which sudden increase and decrease of pressure, density and temperature in compressed fluid is repeated and ultrasonic waves, compression waves that accompany explosion and high speed transferring of matter can be used. Particularly, ultrasonic vibration is preferable from the viewpoints of economical efficiency and safety. The means for heating the raw material liquid is not particularly limited and means such as electric heating using a resistance heating element, gas heating by combustion of flammable gas and indirect heating via a jacket can be employed.

As the means for applying impulse waves and heating, contacting with pulse combustion gas is particularly preferable, as both application of impulse waves and heating can be achieved simultaneously by a single means.

An example of the pulse combustion system that generates pulse combustion gas is for example, the drying machine described in JP-A-8-40720. This system is equipped with a pulse combustion chamber, a drying chamber, a cyclone and a bug filter.

Pulse combustion gas refers to combustion gas that usually pulses at a cycle of 50 to 1000 times per second. This combustion gas is generated by the pulse combustion chamber. The raw material liquid transferred into the combustion gas atmosphere is separated into fine liquid drops having sharp particle size distribution and dried instantaneously by the hot air drying effect and the physical impact properties due to the pulse function including sound pressure and air pressure. The mechanism thereof is not clear. However, it is inferred that the impulse waves act on the liquid column of the raw material liquid sprayed from a common nozzle tip or rotary disc or the surface of the liquid drops after the liquid column is separated and fine liquid drops having sharp particle size distribution, which cannot be obtained by merely using a spraying means such as a nozzle or a rotary disc, are produced because the liquid column is separated into liquid drops of uniform size or the liquid drops are reseparated into liquid drops of uniform size due to impact on each other of the plurality of waves generated on the liquid column or the surface of the liquid drops. The inorganic fine particles obtained in this way may be partially modified depending on the type of the material, but usually, chemical change of the components do not occur and the homogeneity of the chemical composition as the raw material liquid is maintained even in the case of a multi-component system. Therefore, the pulse combustion system is effective as a means for applying impulse waves and heating. The mechanism by which the chemical homogeneity is maintained is not clear. It is inferred that one reason the homogeneity is maintained is because the transport distance of the solute component inside the liquid drops is small as the size of the obtained liquid drops are fine for the reason described above and furthermore, the transport speed of the solute component inside the liquid drops is kept low as the heating temperature is low. However, this explanation is insufficient and the physical impact action including sonic wave force due to rapid pulse action of impulse waves is inferred to be largely involved in the removal of the solvent from the liquid drops.

The frequency range of the pulse combustion gas is preferably 50 to 1,000 Hz, more preferably 100 to 900 Hz, further preferably 125 to 550 Hz. When the frequency is less than 50 Hz, vibration failure due to low frequency may occur. When the frequency is more than 1,000 Hz, the effect of drying may not sufficiently be obtained.

The pressure amplitude of the pulse combustion gas is preferably at least $\pm 0.2$ kg/cm$^2$, more preferably at least $\pm 0.4$ kg/cm$^2$, further preferably at least $\pm 0.6$ kg/cm$^2$. When the pressure amplitude is less than $\pm 0.2$ kg/cm$^2$, separation into fine liquid drops is insufficient and the dispersion effect of the produced particles may be insufficient.

The sound pressure of the pulse combustion gas is preferably 100 to 200 decibel, more preferably 120 to 160 decibel, further preferably 140 to 150 decibel. When the sound pressure is less than 100 decibel, sufficient stirring action and drying action due to the repeated pressure reducing action of air caused by sonic waves in the vicinity of the dispersed particles may not be obtained. When the sound pressure is more than 200 decibel, large cost tends to become necessary for sound proofing measures.

The contact gas temperature of the pulse combustion gas is preferably 100 to 1000°C, more preferably 150 to 700°C, further preferably 200 to 500°C. When the contact gas temperature is lower than 100°C, the particles may not be sufficiently dried. When the contact gas temperature is more than 1000°C, the particles tend to be more susceptible to modification by heat.

As the material of the pulse combustion system machine, stainless steel is suitably used from the viewpoints of economical efficiency and maintenance. In the case that corrosive gas is generated as the liquid raw material dries, the inner face of the drying chamber can be coated with resin such as Teflon® and corrosion-resistant ceramics. When coating with resin, the flow rate and temperature of the pulse combustion gas, the flow rate of the liquid raw material and the concentration of volatile components such as the solvent can be adjusted so that the temperature of the drying chamber is maintained to at most the heat resistant temperature of resin such as Teflon®.

The inorganic raw material powder can be prepared by calcinating, pulverizing and when necessary, granulating the inorganic fine particles obtained by heating and applying impulse waves to the raw material liquid. For example, zirconia raw material powder can be prepared by calcinating, pulverizing and granulating fine particles of complex zirconia hydrate obtained by heating and applying impulse waves to a slurry of zirconia hydrate fine particles. Examples of the calcinating machine are an electric furnace, a vacuum calcinating furnace, an atmospheric calcinating furnace, a gas furnace and an electromagnetic induction furnace, which can control the temperature increase speed, the temperature and particularly, when aiming to obtain non-oxide or metal inorganic raw material powder, the calcinating atmosphere, but are not limited thereto.

The calcination temperature must be a temperature at which conversion to the target compound is achieved by chemical reaction and solid solution and furthermore, is selected accordingly so that the particle size and the degree of agglomeration of the produced particles is within the preferable range. For example, when obtaining fine particles of complex zirconia oxide from complex zirconia hydrate, the temperature is preferably 600 to 1100°C, more preferably 800 to 1000°C. When the calcination temperature is lower than 600°C, solid solution of the zirconium oxide obtained by oxidization of complex zirconia hydrate and the secondary component is insufficient and furthermore, absorption of moisture becomes large and the weight loss by burning when sintering the molded article tends to become large. When the temperature is higher than 1100°C, the produced particles grow too much that sintering properties tend to become poor.

As the atmosphere when calcinating, when oxide raw material powder is desired, the usual atmospheric pressure atmosphere and combustion gas atmosphere for heating are suitably used and when non-oxide or metal raw material powder is desired, nitrogen gas atmosphere, vacuum atmosphere and inert gas atmosphere such as argon gas are suitably used depending on the purpose. In such a case, for example when carbide raw material powder is desired, calcination can be conducted in the condition of a carbon source being co-present in the calcinating furnace or the substance which is to be the carbon source such as carbon or phenol resin can be dissolved or dispersed in advance in the raw material liquid.

The inorganic fine particles of the present invention have a ratio of arithmetic standard deviation to arithmetic average size found from particle size distribution of secondary particle size measured by an optical method (hereinafter referred to as "variation coefficient") of preferably at most 0.8, more preferably at most 0.7, further preferably 0.5. When the ratio is more than 0.8, particularly in fields wherein demands for precision are rising in recent years, coarse particles and fine particles must be eliminated, when the problem of scattering in the inorganic raw material powder and the ultimate product is caused and when the target inorganic fine particles are required to be within a specific particle size range, and yield may decrease. Also, when pulverization treatment is conducted in order to prepare raw material powder, operations may become complicated, for example, pulverization in two steps such as pre-treatment or coarse pulverization and fine pulverization may be required, as coarse particles and fine particles are mixed together. The variation coefficient is more preferable the smaller it is and is preferably substantially 0, but is often sufficiently about 0.2 to achieve the object of the present invention. The inorganic fine particles of the present invention can be determined according to the purpose and from the viewpoint of ease in processing into raw material powder, the arithmetic average size of the secondary particles thereof is preferably 0.1 to 20 μm, more preferably 0.2 to 5 μm, further preferably 0.3 to 1 μm.

The inorganic raw material powder of the present invention has variation coefficient found from particle size distribution of secondary particle size measured by an optical method of preferably at most 0.6, more preferably at most 0.5, further preferably at most 0.4. When the ratio is more than 0.6, scattering of the ultimate article comprising the powder as the raw material may be caused or a separate step for matching the particle size becomes necessary and yield decreases, causing operations to become complicated. The variation coefficient is more preferable the smaller it is and is preferably substantially 0, but is often sufficiently about 0.2 to achieve the object of the present invention. The arithmetic average size of the secondary particles of the inorganic raw material powder of the present invention is not particularly limited. The particle size can be controlled by pulverization depending on the object and is preferably 0.01 to 1 μm, more preferably 0.03 to 0.8 μm, further preferably 0.05 to 0.5 μm.

The optical method mentioned above refers to the laser diffraction method and an example of the laser diffraction particle size distribution measuring machine is SALD-2000 made by Shimadzu Corporation.

The inorganic raw material powder obtained by the preparation process of the present invention has sharp particle size distribution and is suitably used for various uses in which uniformity is required.

For example, by calcinating and processing, the zirconia raw material powder can be used for cutlery and jigs having high strength and toughness, a pulverizing ball and various structural members such as sliding members, mechanical members and optical communication members. Also, the powder can be added to abrasives and cosmetics without calcinating.

Titanium oxide raw material powder can be used as a photocatalyst.

A solid solution of zirconium oxide and cerium oxide and a mixed powder of the solid solution and aluminum oxide can be used as a carrier of a three way catalyst for automobile exhaust gas.

Hereinafter, the present invention is described in detail by means of Examples, but the present invention is not limited thereto.

(Preparation of zirconia hydrate)

Hydrolyzed slurry

An aqueous solution containing 94.2 % by mol of zirconium oxychloride and 5.8 % by mol of yttrium chloride was boiled and hydrolyzed and thereafter, neutralized with 28 % ammonia water to obtain a precipitate. The obtained precipitate was washed with deionized water until the washing fluid no longer became clouded by the sliver nitrate aqueous solution. The washed precipitate was adjusted to be 20 % by weight converted to dried matter and a hydrolyzed slurry was obtained. The fine particles of complex zirconia hydrate in the slurry were 0.1 μm.

Neutralized coprecipitated slurry

An aqueous solution containing 94.2 % by mol of zirconium oxychloride and 5.8 % by mol of yttrium chloride was neutralized by adding 28 % ammonia water to obtain a precipitate. The obtained precipitate was washed with deionized water until the washing fluid no longer became clouded by the sliver nitrate aqueous solution. The washed precipitate was adjusted to be 10 % by weight converted to dried matter and a neutralized coprecipitated slurry was obtained. The fine particles of complex zirconia hydrate in the slurry were 19.2 μm.

(Calcination and pulverization of zirconia hydrate fine particles)

The fine particles of complex zirconia hydrate obtained by drying the slurry of fine particles of complex zirconia hydrate were calcinated at 800 to 1000°C using an electric furnace. The calcinated powder was pulverized for a given time by a continuous ready mill (type SLG-03) made by AIMEX.

(Measurement of powder properties)

(1) Measurement method of particles

Measurement machine: Laser diffraction particle size distribution measurement machine (SALD-2000 made by Shimadzu Corporation)

Preparation of measurement sample: The sample was added to a 0.3 % aqueous solution of sodium hexametaphosphate so that the concentration of dried matter is 0.2 % and then dispersed by placing in a 100 W ultrasonic wave generating machine for 2 minutes. Thereafter, the particle size was measured. From the frequency data per each obtained particle size fraction, the variation coefficient was measured from the following equation.

$$Da = \Sigma i \, (Qi \times Xi) \, / \, \Sigma i \, Qi$$

$$\sigma = \sqrt{[\Sigma i \, \{ \, (Xi - Da)^2 \times Qi \, / \, 100 \} \,]}$$

$$R = \sigma / Da$$

Herein, Da is the arithmetic particle size (μm), Qi is the frequency distribution value in fraction i (%), Xi is the representative particle size in fraction i (μm), Σi is the total regarding fraction i, σ is the arithmetic standard deviation (μm) and R is the variation coefficient.

(2) BET specific surface area

Measurement machine: Gemini 2360 (made by Shimadzu Corporation)

Measurement gas: nitrogen

Preparation of measurement sample and measurement method: A certain amount of the sample was placed in the sample cell and nitrogen was circulated. The sample was heated for 30 minutes at 200°C and then degassing was conducted. Adsorption gas (nitrogen) was simultaneously circulated into the sample cell and the balance cell and the difference in pressure between both cells was detected. The surface area of the sample was calculated.

(3) Measurement of apparent specific gravity of powder

Measurement machine: Powder tester (made by Hosokawa Micron Corporation)

Preparation of measurement sample and measurement method: the weight of an empty cup having a certain volume was measured and the sample passed through a sieve of 250 μm was dropped in by vibration. The specific gravity was calculated from the weight of the sample in the cup.

(4) Identification of crystal phase

Measurement machine: X-ray diffraction meter RAD-C system (made by Rigaku Corporation)

The integrated intensity was found from the diffraction peak of each crystal phase by the powder X-ray diffraction method and each crystal phase was found by applying to the following equation.

$$M = [\{Im(111)+Im(11\text{-}1)\}/\{Im(111)+Im(11\text{-}1)+Ic+t(111)\}] \times 100$$

$$C = [Ic+t(111)/\{Im(111)+Im(11\text{-}1)+Ic+t(111)\}] \times$$

$$[Ic(400)/\{Ic(400)+It(400)+It(004)\}] \times 100$$

$$T = 100\text{-}M\text{-}C$$

Herein, M is the mol % of monoclinic zirconia, C is the mol % of cubic zirconia, T is the mol % of tetragonal zirconia, index m is the monoclinic zirconia, index c is cubic zirconia, index t is tetragonal zirconia and c + t represents both cubic zirconia and tetragonal zirconia. The symbols inside the parentheses are each phase index and I attached to an index represents the integrated intensity in each phase index of each crystal phase.

EXAMPLE 1

The hydrolyzed slurry obtained above was dried by pulse combustion. As the pulse combustion drying machine, Hypulcon® 25 model made by Pultech Corporation was used. The pulse combustion gas generated by the pulse combustion drying machine has frequency of 550 Hz, pressure amplitude of ± 0.8 kg/cm², sound pressure of 145 decibel and contact gas temperature of 280°C. The slurry was dried under conditions of inlet temperature of 190 to 200°C and outlet temperature of 80°C and the dried matter was sieved by a 200 mesh stainless steel wire mesh sieve. The particle size of the sieved particles was measured. The variation coefficient regarding the particle size distribution of the particles was 0.45. Subsequently, the powder was calcinated at 800°C and 1000°C. The particle size and the BET specific surface area of the calcinated article were measured. Thereafter, the calcinated article was pulverized for a given time to obtain a pulverized article. The particle size of the pulverized article was measured. The results are shown in Tables 1 and 2 and Fig. 1.

EXAMPLE 2

The neutralized coprecipitated slurry obtained above was dried by pulse combustion. The pulse combustion drying machine and the pulse combustion gas generated thereby were the same as in Example 1. The obtained dried matter was sieved by a 200 mesh stainless steel wire mesh sieve in the above manner. The particle size of the sieved fine particles was measured. The variation coefficient was 0.63. Subsequently, the powder was calcinated at 800°C and 1000°C. The particle size and the BET specific surface area of the calcinated article were measured. Thereafter, the calcinated article was pulverized for a given time to obtain a pulverized article. The particle size of the pulverized article was measured. The results are shown in Tables 1 and 2.

EXAMPLE 3

The experiment was conducted in the same manner as in Example 1, except that the concentration of the precipitate in the hydrolyzed slurry was 40 % by weight converted to dried matter. The variation coefficient of the particle size of the obtained fine particles was 0.77.

COMPARATIVE EXAMPLE 1

The hydrolyzed slurry obtained above was placed in a stainless steel pallet. The water content was evaporated with a hot air dryer at 105°C and the slurry was still dried. After drying, the dried matter was pulverized with a mortar and sieved with a 200 mesh stainless steel wire mesh sieve. The particle size of the sieved powder was measured. The variation coefficient of the obtained powder was 0.91. Subsequently, the powder was calcinated at 800°C and 1000°C. The particle size and the BET specific surface area of the calcinated article were measured. Thereafter, the calcinated article was pulverized for a given time to obtain a pulverized article. The particle size of the pulverized article was measured. The results are shown in Tables 1 and 2 and Fig. 1.

COMPARATIVE EXAMPLE 2

The hydrolyzed slurry obtained above was spray dried. As the spray drying machine, L-12 type made by Ogawara MFG. Co., LTD. was used. The slurry was dried under conditions of inlet temperature of 180°C and outlet temperature of 80°C using a binary nozzle and the dried matter was sieved by a 290 mesh stainless steel wire mesh sieve. The particle size of the sieved powder was measured. The variation coefficient was 1.01. Subsequently, the powder was calcinated at 800°C and 1000°C. The particle size and the BET specific surface area of the calcinated article were measured. Thereafter, the calcinated article was pulverized for a given time to obtain a pulverized article. The particle size of the pulverized article was measured. The results are shown in Tables 1 and 2 and Fig. 1.

COMPARATIVE EXAMPLE 3

The neutralized coprecipitated slurry obtained above was still dried. The drying method was the same as in Comparative Example 1. The variation coefficient of the particle size of the obtained fine particles was 0.95.

COMPARATIVE EXAMPLE 4

The neutralized coprecipitated slurry obtained above was spray dried. The drying machine and method were the same as in Comparative Example 2. The variation coefficient of the particle size of the obtained fine particles was 0.98.

As additional examples, Examples using an aqueous solution of zirconyl chloride are shown below.

EXAMPLE 4

(Preparation of zirconyl chloride aqueous solution)

6252.8 g of zirconium oxychloride octahydrate having purity of 95 %, 702 g of an aqueous solution of yttrium chloride hexahydrate containing 18.35 % of yttrium converted to yttrium oxide and 34.2 g of ammonium chloride hexahydrate of a high grade reagent were dissolved in 12.135 kg of deionized water while stirring.

The aqueous solution of zirconium salt obtained in the above manner was treated with a pulse combustion gas impulse wave system. As the pulse combustion gas impulse wave system, Hypulcon HP-2 made by Pultech Corporation was used. The pulse combustion gas generated by the pulse combustion gas impulse wave system has frequency of 900 Hz, pressure amplitude of $\pm$ 0.25 kg/cm$^2$, sound pressure of 120 decibel and contact gas temperature of 150°C. The aqueous solution was dried under conditions of treatment chamber and outlet temperature of 70°C and the obtained powdery solid particles were thermally treated for 1 hour at 550°C and 1000°C to obtain high strength zirconium oxide powder. When the metal atoms are not uniformly dispersed as in the prior art, when paying attention to dispersion of yttrium, the diffraction peak of monoclinic zirconia is obtained from the area of the powder wherein a small amount of yttrium is present or yttrium is absent. However, the crystal phase of the powder obtained in the present Example was a tetragonal single phase regardless of the temperature at which thermal treatment was conducted and the diffraction peak of monoclinic zirconia is not expressed. Also, the obtained powder was found to have a uniform chemical composition when microscopically observed.

COMPARATIVE EXAMPLE 5

The same aqueous solution of zirconium salt as in Comparative Example 4 was spray dried at a drying temperature of 110°C using Spray Drier SD-2 made by Tokyo Rikakikai Co., LTD. The obtained dried particles were thermally treated for 1 hour at 550°C to obtain high strength zirconium oxide powder. The crystal phase of the obtained powder was tetragonal and monoclinic and the amount of monoclinic zirconia was 21.8 % by mol. Consequently, the obtained powder had areas of different chemical composition microscopically and was inferior in homogeneity.

EXAMPLE 5

(Preparation of zirconyl chloride aqueous solution)

Zirconium oxychloride octahydrate (containing 5 % by weight of free hydrogen chloride) was dissolved in distilled water to prepared an aqueous solution of 1.5 % by mol/liter. The aqueous solution was dried using the small-size pulse combustion gas impulse wave system, Hypulcon HP-2 made by Pultech Corporation. The pulse combustion gas generated by the pulse combustion gas impulse wave system has frequency of 125 Hz, pressure amplitude of $\pm$ 0.5 kg/cm$^2$, sound pressure of 160 decibel and contact gas temperature of 500°C and treatment was conducted at an average treatment rate of 1.5 liter/hour at drying chamber temperature of 60°C. The water content and the chlorine content of the obtained powder were analyzed and the water concentration was 16.9 % and the chlorine concentration was 32.8 %. That is, although the drying temperature is lower than 100°C, it is observed that crystal water and part of the flocked chlorine are removed from the raw material $ZrOCl_2 \cdot 8H_2O$ and powder estimated to have the chemical structure of $ZrO_{1.01}Cl_{1.98} \cdot 2H_2O$ is obtained.

COMPARATIVE EXAMPLE 6

The same aqueous solution as in Example 3 was spray dried at a drying temperature of 110°C using Spray Drier SD-2 made by Tokyo Rikakikai Co., LTD. The water content and the chlorine content of the obtained powder were 44.7 % and 22.0 % respectively. That is, although drying was conducted at a temperature higher than 100°C, substances other than free water and free hydrogen chloride are not removed and the obtained powder has the same chemical structure as the raw material, $ZrOCl_2 \cdot 8H_2O$.

TABLE 1

| | Particle size of zirconia hydrate particles before calcination (μm) | | Particle size of zirconia hydrate and BET specific surface area after calcination (before pulverization) | | | | Apparent specific gravity (g/ml) |
| --- | --- | --- | --- | --- | --- | --- | --- |
| | | | Calcination temperature | | | | |
| | | | 800°C | | 1000°C | | |
| | Particle size (μm) | Variation coefficient (–) | Particle size (μm) | BET specific surface area (m²/g) | Particle size (μm) | BET specific surface area (m²/g) | |
| Ex. 1 | 5.3 | 0.45 | 4.5 | 25.6 | 4.2 | 14.9 | 0.796 |
| Ex. 2 | 15.4 | 0.63 | 18.6 | 13.6 | 21.0 | 5.6 | 0.753 |
| Ex. 3 | 11.7 | 0.77 | 13.0 | 21.3 | 12.8 | 14.0 | 0.793 |
| Com. Ex. 1 | 19.1 | 0.91 | 20.3 | 31.7 | 25.0 | 15.6 | 0.592 |
| Com. Ex. 2 | 11.8 | 1.01 | 10.8 | 30.6 | 9.3 | 15.6 | 0.820 |
| Com. Ex. 3 | 38.2 | 0.95 | 38.3 | 21.8 | 31.9 | 7.5 | 0.777 |
| Com. Ex. 4 | 21.7 | 0.98 | 22.1 | 19.0 | 25.0 | 5.6 | 0.773 |

TABLE 2

| Calcination temperature | 800°C | | | | 1000°C | | | |
|---|---|---|---|---|---|---|---|---|
| Pulverization time | 0 min. | 5 min. | 30 min. | 60 min. | 0 min. | 5 min. | 30 min. | 60 min. |
| Ex. 1 | 4.5 | 0.6 | 0.2 | 0.2 | 4.2 | 0.4 | 0.2 | 0.2 |
| Ex. 2 | 18.6 | 0.7 | 0.5 | 0.4 | 21.0 | 0.4 | 0.3 | 0.3 |
| Ex. 3 | 13.0 | 0.9 | 0.5 | 0.5 | 12.8 | 0.6 | 0.4 | 0.4 |
| Com. Ex. 1 | 20.3 | 3.5 | 0.9 | 0.6 | 25.0 | 2.5 | 0.4 | 0.3 |
| Com. Ex. 2 | 10.8 | 0.7 | 0.5 | 0.5 | 9.3 | 1.5 | 0.3 | 0.2 |
| Com. Ex. 3 | 38.3 | 15.0 | 1.2 | 0.4 | 31.9 | 13.2 | 0.6 | 0.4 |
| Com. Ex. 4 | 22.1 | 8.6 | 0.5 | 0.4 | 25.0 | 9.5 | 0.5 | 0.3 |

Fig. 1 shows that by drying the fine particles of complex zirconia hydrate in the slurry by the pulse combustion gas of the present invention, the agglomeration action due to surface tension of water can be suppressed without adding an additive such as a surfactant and the particle size of the dried matter can be made small. Also, the particles have extremely sharp particle size distribution.

Table 1 shows that the bulk density of the zirconia hydrate fine powder obtained by the present invention is about the same as particles of zirconia hydrate powder obtained by still drying or spray drying. Also, the particle size of the zirconia hydrate fine particles obtained by the present invention is about at most 5 μm when the hydrolyzed slurry is used and about at most 20 μm when the neutralized coprecipitated slurry is used.

Also, in pulse combustion drying, clogging of the nozzle and abrasion of the equipment due to high speed rotation did not occur.

Table 2 shows that in the pulverization step conducted after calcination of the fine particles of zirconia hydrate obtained by the present invention, the pulverization time for making the particle size uniform can be extremely short.

From comparing Example 4 and Comparative Example 5, it is evident that in the high strength zirconium oxide powder obtained by the present invention, the ratio of yttrium oxide to zirconium oxide within a specific range both macroscopically and microscopically and therefore, the powder is powder having extremely high chemical homogeneity.

From comparing Example 5 and Comparative Example 6, it is evident that crystal water and part of the flocked chlorine which usually cannot be removed unless exposed to a high temperature are removed from the fine particles of zirconium oxychloride obtained by the present invention, although treatment is conducted at a temperature lower than in the Comparative Example. This implies that free water which has weaker bonding force than crystal water is already removed at a temperature lower than in the Example. The reason therefor is presumed to be the stirring effect of the surface of the liquid drops due to sudden pulse action of impulse waves or the evaporation accelerating effect of free water due to low pressure areas in pressure fluctuation, but is not clear. According to the preparation process of the present invention, synthesis of powder at a temperature lower than the usual method is possible. By using the method of the present invention, even when highly corrosive substances such as strongly acidic substances given in Examples 4 and 5 are used, the heating temperature can be low and therefore, resin such as Teflon® can be used. As a result, the range of choice of the machine material is wide, thus being economical.

INDUSTRIAL APPLICABILITY

The present invention can be applied to synthesis of electronic ceramics material such as barium titanate, synthesis of titanium oxide photocatalysts, three way catalyst carriers for automobile exhaust gas and non-oxide ceramics material such as nitrides, carbides and borides, metal materials used in powder metallurgy and fillers used in resin and fiber. The range of application thereof is not limited thereto.

**Claims**

1. A process for preparing inorganic fine particles, which comprises heating and applying impulse waves to a raw material liquid.

2. The process for preparing inorganic fine particles of Claim 1, wherein said impulse waves are ultrasonic waves.

3. The process for preparing inorganic fine particles of Claim 1 or 2, wherein heating and application of impulse waves to said raw material liquid is conducted by contacting said raw material liquid with pulse combustion gas.

4. The process for preparing inorganic fine particles of Claim 3, wherein said pulse combustion gas has frequency range of 50 to 1000 Hz, pressure amplitude of at least ± 0.2 kg/cm$^2$, sound pressure of 100 to 200 decibel and contact gas temperature of 100 to 1000°C.

5. The process for preparing inorganic fine particles of Claim 1, 2, 3 or 4, wherein said raw material liquid is a mixture of a solvent and an inorganic metal compound and/or a solution of an inorganic metal compound.

6. The process for preparing inorganic fine particles of Claim 5, wherein said mixture of a solvent and an inorganic metal compound is a mixture of a solvent and an inorganic metal hydrate insoluble in said solvent and the obtained inorganic particles are fine particles of inorganic metal hydrate.

7. The process for preparing inorganic fine particles of Claim 6, wherein said mixture of a solvent and an inorganic metal hydrate insoluble in said solvent contains at least one of a slurry of zirconia hydrate fine particles, a slurry of ceria hydrate fine particles, a slurry of titania hydrate fine particles, a slurry of fine particles of a hydrated silicic compound and a slurry of alumina hydrate fine particles.

8. The process for preparing inorganic fine particles of Claim 6 or 7, wherein said mixture of a solvent and an inorganic metal hydrate insoluble in said solvent comprises a neutralized hydroxide, a neutralized coprecipitated hydroxide, a hydrolyzate or a composite thereof.

9. The process for preparing inorganic fine particles of Claim 6, 7 or 8, wherein said fine particles of inorganic metal hydrate in said mixture of a solvent and an inorganic metal hydrate insoluble in said solvent are 0.01 to 50 µm.

10. The process for preparing inorganic fine particles of Claim 5, wherein said solution of an inorganic metal compound is an aqueous solution of a water-soluble inorganic metal salt and the obtained inorganic particles are fine particles of inorganic metal salt or modifications thereof.

11. The process for preparing inorganic fine particles of Claim 10, wherein said aqueous solution of a water-soluble inorganic metal salt contains at least one of an aqueous solution of zirconyl chloride, an aqueous solution of zirconyl sulfate, an aqueous solution of zirconyl nitrate, an aqueous solution of cerium chloride, an aqueous solution of titanium tetrachloride, an aqueous solution of titanium trichloride, an aqueous solution of aluminum chloride, an aqueous solution of magnesium chloride, an aqueous solution of calcium chloride or an aqueous solution of a silicic compound.

12. A process for preparing inorganic raw material powder, which comprises calcinating and pulverizing the inorganic particles obtained by the process of Claim 1, 2, 3, 4, 5, 6, 7, 8, 9, 10 or 11.

13. An inorganic fine particle having a ratio of arithmetic standard deviation to arithmetic average size found from particle size distribution of secondary particle size measured by an optical method of at most 0.8.

14. An inorganic raw material powder having a ratio of arithmetic standard deviation to arithmetic average size found from particle size distribution of secondary particle size measured by an optical method of at most 0.6.

15. The inorganic fine particle of Claim 13, wherein said arithmetic average size of secondary particles is 0.1 to 20 µm.

16. The inorganic raw material powder of Claim 14, wherein said arithmetic average size of secondary particles is 0.1 to 1 µm.

# FIG. 1

Legend:
- ●── : PULSE COMBUSTION DRYING
- ◆── : STILL DRYING
- ×── : SPRAY DRYING

DIFFERENCE (%) vs PARTICLE SIZE (μm)

EP 1 561 508 A1

<table>
<tr><td colspan="2">**INTERNATIONAL SEARCH REPORT**</td><td>International application No.<br>PCT/JP03/14128</td></tr>
</table>

A. CLASSIFICATION OF SUBJECT MATTER
 Int.Cl$^7$ B01J19/10, 3/08, C01G25/02, F26B3/10, 5/02

According to International Patent Classification (IPC) or to both national classification and IPC

B. FIELDS SEARCHED

Minimum documentation searched (classification system followed by classification symbols)
 Int.Cl$^7$ B01J19/10, 3/08, C01G25/02, F26B3/10, 5/02

Documentation searched other than minimum documentation to the extent that such documents are included in the fields searched
 Jitsuyo Shinan Koho          1926-1996   Toroku Jitsuyo Shinan Koho    1994-2003
 Kokai Jitsuyo Shinan Koho    1971-2003   Jitsuyo Shinan Toroku Koho    1996-2003

Electronic data base consulted during the international search (name of data base and, where practicable, search terms used)
 DIALOG(WPI/L)

C. DOCUMENTS CONSIDERED TO BE RELEVANT

| Category* | Citation of document, with indication, where appropriate, of the relevant passages | Relevant to claim No. |
|---|---|---|
| X | JP 3-10008 A  (NKK Corp.),<br>17 January, 1991 (17.01.91),<br>(Family: none) | 1,2 |
| X | JP 2002-294311 A  (Toda Kogyo Kabushiki Kaisha),<br>09 October, 2002 (09.10.02),<br>(Family: none) | 13-16 |
| A | US 6211043 A  (MATSUSHITA DENCHI KOGYO KABUSHIKI KAISHA),<br>03 April, 2001 (03.04.01),<br>& JP 11-87747 A | 1-16 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
 18 February, 2004 (18.02.04)

Date of mailing of the international search report
 02 March, 2004 (02.03.04)

Name and mailing address of the ISA/
 Japanese Patent Office

Authorized officer

Facsimile No.

Telephone No.

Form PCT/ISA/210 (second sheet) (July 1998)